# EUROPEAN PATENT APPLICATION

(11) **EP 3 643 477 A1**
(43) Date of publication of application: **29.04.2020**
(21) Application number: 18202969.4
(22) Date of filing: 26.10.2018
(51) Int. Cl.: B29C 64/153, B29C 64/205, B29C 64/236, B29C 64/343, B22F 3/105

(54) **APPARATUS FOR ADDITIVELY MANUFACTURING A THREE-DIMENSIONAL OBJECT**

(71) Applicant: Concept Laser GmbH, 96215 Lichtenfels (DE)
(72) Inventor: Braunroth, Domenik, 96465 Neustadt bei Coburg (DE)
(74) Representative: Hafner & Kohl Patent- und Rechtsanwälte Partnerschaft mbB

(57) **Abstract**

Apparatus (1) for additively manufacturing a three-dimensional object (2) by means of successive layerwise selective irradiation and consolidation of layers of build material (4) which can be consolidated by means of at least one energy beam (5), the apparatus (1) comprising a build material application device (7) configured to apply an amount of build material (4) in a build plane (BP) of the apparatus (1) so as to form a build material layer (3) which is to be selectively irradiated and consolidated by means of the at least one energy beam (5), wherein the build material application device (7) comprises:
a build material conveying unit (9) comprising at least one, particularly band- or belt-like,
conveying element (11), the conveying element (11) being operable to convey build material (4) along a build material conveying path (CP) above the build plane (BP) of the apparatus (1); and
a recoating unit (10) comprising at least one recoating element (20) being operable to apply an amount of build material (4) in the build plane (BP) of the apparatus (1) so as to form build material layer (3) which is to be is to be selectively irradiated and consolidated by means of the at least one energy beam (5).

## Description

The invention refers to an apparatus for additively manufacturing a three-dimensional object ("additive manufacturing apparatus") by means of successive layerwise selective irradiation and consolidation of layers of build material which can be consolidated by means of an energy beam, the additive manufacturing apparatus comprising a build material application device configured to apply an amount of build material in a build plane of the apparatus so as to form a build material layer which is to be selectively irradiated and consolidated by means of the at least one energy beam.

A respective additive manufacturing apparatus is generally known from prior art. Merely as an example, a respective additive manufacturing apparatus may be embodied as a selective laser melting apparatus or as a selective electron beam melting apparatus.

A respective additive manufacturing apparatus typically comprises a build material application device configured to apply an amount of build material in a build plane of the apparatus so as to form respective build material layers which are to be selectively irradiated and consolidated by means of the at least one energy beam.

The configuration and functionality of the build material application device is of high importance for the overall efficiency and quality of the build material application process and the additive build process.

In order to increase efficiency and quality of respective build material application processes, additive build processes, additive manufacturing apparatuses comprising further developed build material application devices are desired. Thereby, build material application devices allowing for build material application approaches with increased efficiency and quality are of particular interest for improving the efficiency and quality of the build material application processes and additive build processes, respectively.

Hence, there is a need for an additive manufacturing apparatus comprising a further improved build material application device allowing for build material application approaches with increased efficiency and quality.

It is the object of the present invention to provide an apparatus for additively manufacturing a three-dimensional object by means of successive layerwise selective irradiation and consolidation of layers of build material which can be consolidated by means of an energy beam allowing for build material application approaches with increased efficiency and quality.

This object is achieved by the subject-matter of the independent Claims. The Claims depending on the independent Claims relate to possible embodiments of the subject-matters of the independent Claims.

An aspect of the present invention refers to an apparatus ("apparatus") for additively manufacturing at least one three-dimensional object by means of successive layerwise selective irradiation and consolidation / solidification of build material layers which can be consolidated / solidified by means of being irradiated with at least one energy beam, i.e. layers of a build material which can be consolidated by means of being irradiated with at least one energy beam. The build material may be provided as a powder, for instance. The build material may be or comprise a ceramic, a polymer, or a metal, for instance. The energy beam may be an electron beam or a laser beam, for instance. The apparatus may be implemented as a selective laser sintering apparatus, a selective laser melting apparatus, or a selective electron beam melting apparatus, for instance. Yet, it is also conceivable that the apparatus is a binder jetting apparatus, particularly a metal binder jetting apparatus, for instance.

The apparatus comprises a build plane. The build plane can be defined as a plane in which the successive layerwise selective irradiation and consolidation of layers of build material which can be consolidated by means of an energy beam and thus can take place during operation of the apparatus. The build plane is typically disposed in a process chamber of the apparatus. The build plane typically extends in or parallel to a bottom wall of the process chamber of the apparatus.

The apparatus comprises a number of functional devices which are operable during its operation. Each functional device may comprise a number of functional units. A first exemplary functional device is a build material application device configured to apply an amount, particularly a specific amount, of build material in the build plane of the apparatus so as to form a build material layer which is to be selectively irradiated and consolidated by means of the at least one energy beam. A second exemplary functional device is an irradiation device adapted to successively selectively irradiate and consolidate respective layers of build material applied in the build plane of the apparatus with at least one energy beam, e.g. an electron beam or a laser beam. Additional functional devices are conceivable.

As mentioned above, the apparatus comprises a build material application device configured to apply an amount of build material in the build plane of the apparatus so as to form a build material layer which is to be selectively irradiated and consolidated by means of the at least one energy beam.

According to the present invention, the build material application device comprises a build material conveying unit and a recoating unit.

The build material conveying unit comprises at least one band- or belt-like conveying element. The conveying element may be built as or comprise at least one endless band-, belt-, chain-, or bucket wheel- arrangement, the conveying element may thus, be or comprise an endless conveyor. The conveying element is typically disposed in the process chamber of the apparatus. In either case, the conveying element is operable to convey build material along a build material conveying path above the build plane of the apparatus. The conveying element thus, typically defines a build material conveying path extending above the build plane of the apparatus. The build material conveying path is typically defined by a loading portion of the conveying element at which build material which is to be conveyed along the build material conveying path is or can be loaded onto the conveying element and an unloading portion of the conveying element from which build material which has been conveyed along the build material conveying path is or can be unloaded from the conveying element. The conveying element is thus, operable to convey build material between a loading portion at which build material is or can be loaded onto the conveying element and an unloading portion from which build material conveyed by the conveying element is or can be unloaded from the conveying element.

The build material conveying path typically extends parallel to the build plane of the apparatus, i.e. parallel to a bottom or top wall of the process chamber of the apparatus; yet, other orientations of the build material conveying path, such as inclined orientations of the build material conveying path relative to the build plane of the apparatus, are conceivable.

The length of the build material conveying path typically corresponds to a defined amount of build material conveyable or to be conveyed by the conveying element. Hence, by varying the length of the build material conveying path, i.e. the distance between a respective loading and unloading portion of the conveying element, the amount of build material which is conveyable or conveyed by the conveying element can be varied.

The conveying element is typically driveable or moveable in terms of a band- or belt-conveyor which is a preferred embodiment of the conveying element. The conveying unit typically comprises a drive, e.g. a motor, directly or indirectly coupled to the conveying element so as to drive or move the conveying element in at least one degree of freedom of motion. When driven or moved, the conveying element typically moves relative one or more supporting elements, such as rollers, wheels, etc., supporting the conveying element. Typically, a respective motion of the conveying element is or comprises a revolving motion in which the conveying element revolves around respective supporting elements in accordance with a band- or belt-conveyor.

The recoating unit comprises at least one recoating element. The recoating element may be built as or comprise at least one re-coating blade. Yet, other embodiments of the recoating element are conceivable. As such, the recoating element may be built as or comprise a build material chamber having at least one, particularly gate-like, opening through which build material may be output from the build material chamber so as to apply an amount, particularly a specific amount, of build material in the build plane of the apparatus so as to form a build material layer which is to be selectively irradiated and consolidated by means of the at least one energy beam. The build material chamber may comprise at least one closing element allocated to the at least one opening of the chamber so as to concertedly open or close the opening of the build material chamber. In either case, the recoating element is typically disposed in the process chamber of the apparatus below the conveying element. In either case, the recoating element is operable to apply an amount of build material in the build plane of the apparatus so as to form a build material layer which is to be selectively irradiated and consolidated by means of the at least one energy beam.

The recoating element is typically moveably supported at least along a build material application path in which the recoating element is moveable or moved across the build plane of the apparatus so as to form a build material layer which is to be selectively irradiated and consolidated by means of the at least one energy beam. As such, the recoating element is typically also moveably supported relative to the conveying unit and the conveying element, respectively. The recoating unit typically comprises a drive, e.g. a motor, directly or indirectly coupled to the recoating element so as to drive or move the recoating element in at least one degree of freedom of motion. Typically, a respective degree of freedom motion of the recoating element is or comprises a linear motion in which the recoating element linearly moves along the build material application path across the build plane of the apparatus.

The conveying unit, i.e. particularly the conveying element, and the recoating unit, i.e. particularly the recoating element, act together in such a manner that the conveying element doses an amount of build material, particularly a specific amount of build material, for the recoating element. The recoating element will apply this dosed amount of build material in the build plane of the apparatus so as to form a respective build material layer which is to be selectively irradiated and consolidated by means of the at least one energy beam. The conveying element allows for efficient and highly exact dosing of build material which is to be applied in the build plane of the apparatus by the recoating element so as to form a respective build material layer resulting in a build material application approach with increased efficiency and quality.

The cross-sectional length (width) of the conveying element may be at least half the length of the recoating element. It is also possible that the cross-sectional length (width) of the conveying element corresponds to the length of the recoating element. Generally, the cross-sectional length (width) of the conveying element may be chosen so as to allow for dosing a proper amount of build material in front of the recoating element. The cross-sectional shape of the conveying element may be plane or at least partially bent or curved. Bent or curved portions may be particularly, provided in the lateral border regions of the conveying element so as to avoid that build material can fall off the conveying element.

It has been mentioned that the build material conveying path is disposed above the build plane of the apparatus. Hence, there is a vertical gap between the build material conveying path and the build plane of the apparatus. Disposing the build material conveying path above the build plane improves accessibility and serviceability of the conveying element and the build material conveying unit, respectively. Typically, the conveying element and/or other components of the build material conveying unit is also disposed above the build plane of the apparatus so that there is a vertical gap between the conveying element and other components of the build material conveying unit and the build plane of the apparatus. The conveying element and/or other components of the build material conveying unit may thus, be supported in a hanging or suspended arrangement.

The conveying element may be stationary supported in the process chamber of the apparatus, particularly in a region lateral to the build plane of the apparatus. Generally, the conveying element is typically disposed in a region of the process chamber of the apparatus in which it cannot negatively affect the at least one energy beam and the selective irradiation of a build material layer in the build plane of the apparatus by means of the at least one energy beam. As such, the conveying element may be disposed in a region lateral to the build plane of the apparatus, for instance.

Yet, it is also possible that the conveying element is moveably supported relative to the build plane of the apparatus. The conveying element may be particularly, moveably supported relative to the build plane of the apparatus so as to move in a motion path across the build plane of the apparatus. The conveying element may be particularly, moveably supported relative to the build plane of the apparatus in a motion path defined between a first position at a first lateral side of the build plane of the apparatus and a second position at a second lateral side of the build plane of the apparatus so as to be reversibly moveable between the two positions. The two positions of the conveying element may correspond to respective start and/or end positions of the recoating element so that the conveying element may dose an amount of build material in the respective start and/or end positions of the recoating element at two sides of the build plane of the apparatus allowing for that the recoating element can apply build material in the build plane of the apparatus when starting its motion across the build plane of the apparatus from either side of the build plane of the apparatus. The motion of the conveying element across the build plane of the apparatus may be synchronized with the motion of the recoating element across the build plane of the apparatus.

It has been mentioned that the build material conveying path typically extends parallel to the build plane of the apparatus, i.e. parallel to a bottom or top wall of the process chamber of the apparatus. As such, the conveying element typically also extends parallel to the build plane of the apparatus, i.e. parallel to a bottom or top wall of the process chamber of the apparatus. The aforementioned other orientations, such as inclined orientations, of the build material conveying path relative to the build plane of the apparatus are feasible by changing the orientation of the conveying element relative to the build plane of the apparatus which can be accomplished by a hingeable or pivotable support of the conveying element allowing for hinging or pivoting the conveying element relative to the build plane of the apparatus, for instance. Changes of the orientation of the build material conveying path and the conveying element, respectively relative to the build plane of the apparatus can be useful as a measure for influencing, i.e. for accelerating and/or decelerating, the conveyance of build material.

The build material application device may further comprise at least one build material containing unit. The build material containing unit comprises a, particularly container-like, containing element disposed above the conveying element. The containing element typically comprises a build material receiving space or volume allowing for receiving a defined amount of build material, e.g. supplied from a superordinate build material supply. The build material receiving space or volume of the containing element is typically defined by walls of the containing element. The receiving space or volume typically communicates with an outlet opening of the containing element allowing for outputting build material from the build material receiving space or volume onto the conveying element, i.e. particularly onto a freely exposed conveying surface of the conveying element which is oriented towards the containing element.

The aforementioned outlet opening of the containing element may be at least temporarily unobstructed. The containing element may thus, comprise an unobstructed outlet opening through which build material is outputtable or output from the containing element onto the conveying element, particularly onto a freely exposed conveying surface of the conveying element which is oriented towards the containing element.

The distance between the containing element, particularly an outlet opening of the containing element, and the conveying element, particularly the freely exposed conveying surface of the conveying element which is oriented towards the containing element, can be less than 10 mm, particularly less than 5 mm, preferably less than 1 mm. Generally, the distance - which is typically defined by a gap space between the containing element and the conveying element - may be so small that the surface of the conveying element builds a barrier avoiding undesired excess output of build material from the containing element onto the conveying element. Hence, the output of build material from the containing element can be controlled by driving or moving the conveying element relative to the outlet opening of the containing element allowing for a continuous or discontinuous output of build material from the containing element onto the conveying element. A small distance between the outlet opening of the containing element and the conveying element also allows for avoiding undesired generation of dust, swirl, etc.

The containing element may be moveably supported relative to the conveying element, or vice versa, so as to adjust the distance between the loading portion of the conveying element at which build material is or can be loaded onto the conveying element and the unloading portion of the conveying element from which build material conveyed by the conveying element is or can be unloaded from the conveying element. As mentioned above, the distance between the loading portion and the unloading portion of the conveying element typically corresponds to a defined amount of build material conveyable or to be conveyed by the conveying element.

The apparatus may further comprise a hardware- and/or software-embodied control device configured to control operation of the build material application device. The control device is particularly configured to control at least one conveying motion parameter of a conveying motion of the conveying element, particularly conveying direction, conveying speed, start and stop intervals of conveying, etc. The control device may be configured to control a conveying motion of the conveying element on basis of a motion and/or position of the recoating element relative to the conveying element. The control device may thus, be configured to start a conveying motion of the conveying element, e.g. a revolving motion of the conveying element as mentioned above, when the recoating element is moved and/or positioned outside the build plane of the apparatus. The control device may be particularly, configured to start a conveying motion of the conveying element when the recoating element is moved and/or positioned outside the build plane of the apparatus and within a pre-definable or pre-defined minimum distance relative to the conveying element, particularly relative to a build material unloading portion of the conveying element. The recoating element may be moved and/or positioned within a pre-definable or pre-defined minimum distance relative to the conveying element, particularly relative to a build material unloading portion of the conveying element, when the recoating element is in a start position from which it starts its motion along the build material application path across the build plane of the apparatus, for instance. The conveying element may thus, be operable in discontinuous manner. Yet, a continuous operation of the conveying element is generally, also conceivable.

The detection of motion and/or positions of the recoating element may be detected by a detection device of the apparatus. The detection device may comprise at least one, e.g. optical or mechanical, detection element configured to detect motions and/or positions of the recoating element.

The conveying element may have a freely exposed conveying surface, being provided with a plurality of build material conveying compartments of given dimensions. Providing the conveying element with respective compartments may improve exact dosing of build material by the conveying element. Respective build material conveying compartments may be defined by two adjacent protrusion-like elements. As such, the conveying element may comprise a toothed structure. The conveying element may thus, be built as or comprise a toothed band, belt, chain, or bucket wheel, for instance.

The build material conveying unit may comprise at least two separate conveying elements.

According to a first exemplary configuration of a build material conveying unit comprising at least two separate conveying elements, at least one first conveying element is disposed at a first lateral side of the build plane of the apparatus and at least one second conveying element is disposed at a second lateral side of the build plane of the apparatus. According to this first exemplary configuration, the build material conveying device may also comprise at least two separate containing elements, whereby at least one first containing element is assigned to at least one first conveying element and at least one second containing element is assigned to at least one second conveying element. Providing two or more respective conveying elements may further improve efficiency of the build material application and the formation of build material layers since it can be effected from two sides of the build plane of the apparatus.

According to an alternative or additional exemplary second configuration of a build material conveying unit comprising at least two separate conveying elements, at least one first conveying element is disposed at a first vertical position and at least one second conveying element is disposed at a second vertical position below the at least one first conveying element. As such, build material conveyed by the first conveying element is conveyable onto a conveying surface of the at least one second conveying element. Hence, a vertically staggered, yet horizontally typically at least partially overlapping arrangement of at least two conveying elements is possible, whereby build material conveyed from an upper conveying element can be conveyed onto the freely exposed conveying surface of a lower second conveying element. According to this exemplary second configuration, the build material conveying device may also comprise at least two separate containing elements, whereby at least one first containing element is assigned to at least one first conveying element and at least one second containing element is assigned to at least one second conveying element.

According to the second exemplary configuration, the at least one first conveying element may convey a first build material and the at least one second conveying element may convey a second build material which differs from the first build material in at least one chemical and/or physical build material parameter, e.g. chemical composition, particle size (distribution), particle morphology (distribution), etc. Thus, a concerted mixing of first and second build materials is possible e.g. on the conveying surface of the second conveying element so as to generate and convey a mixture of first and second build materials.

A further aspect of the present invention refers to a build material application device for an apparatus for additively manufacturing a three-dimensional object by means of successive layerwise selective irradiation and consolidation of layers of build material which can be consolidated by means of an energy beam. The build material application device is configured to apply an amount of build material in a build plane of the apparatus so as to form a build material layer which is to be selectively irradiated and consolidated by means of the at least one energy beam. The build material application device comprises a build material conveying unit comprising at least one particularly band- or belt-like, conveying element. The conveying element is operable to convey build material along a build material conveying path above the build plane, and a recoating unit comprising at least one recoating element being operable to apply an amount of build material in the build plane of the apparatus so as to form a build material layer which is to be is to be selectively irradiated and consolidated by means of the at least one energy beam.

A further aspect of the present invention refers to a method for applying an amount of build material in a build plane of an apparatus for additively manufacturing so as to form a build material layer which is to be selectively irradiated and consolidated by means of at least one energy beam, wherein a build material application device as described herein is used for performing the method. The method may particularly, comprise the steps of: conveying an amount of build material along a build material conveying path by means of a build material conveying unit comprising at least one, particularly band- or belt-like, build material conveying element, the conveying element being configured to convey build material along a build material conveying path above the build plane; and applying the amount of build material conveyed by the build material conveying element by the recoating element so as to form a build material layer which is to be selectively irradiated and consolidated in the build plane of the apparatus.

All annotations referring to the apparatus also apply to the build material application device and/or to the method.

Exemplary embodiments of the invention are described with reference to the Fig., whereby:
- Fig. 1: shows a principle drawing of an apparatus for additively manufacturing of a three-dimensional object according to an exemplary embodiment; and
- Fig. 2 - 6: each show a principle drawing of a build material application device according to an exemplary embodiment in a top-view.

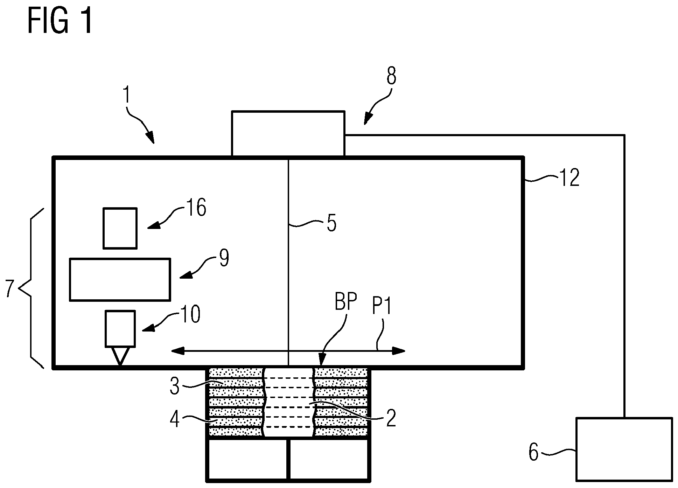

Fig. 1 shows a principle drawing of an exemplary embodiment of an apparatus 1 for additively manufacturing one or more three-dimensional objects 2, e.g. technical components, by means of successive layerwise selective irradiation and accompanying consolidation of build material layers 3 of a powdered build material 4 which can be consolidated by means of at least one energy beam 5 according to an exemplary embodiment. The build material 4 can be a metal powder, for instance. The energy beam 5 can be an electron beam or a laser beam, for instance. The apparatus 1 may be embodied as a selective electron beam melting apparatus or as a selective laser melting apparatus, for instance.

The apparatus 1 comprises a number of functional devices which are operable and operated during its operation. Each functional device may comprise a number of functional units. Operation of the functional devices and/or elements and the entire apparatus 1, respectively is controlled by a hard- and/or software embodied (central) control device 6.

Exemplary functional devices of the apparatus 1 are an irradiation device 8, a build material application device 7, and the control device 6. Further functional devices of the apparatus 1 may be provided even though not depicted in the Fig.

The irradiation device 8 is configured to selectively irradiate and thereby, consolidate respective build material layers 3 which have been applied in the build plane BP of the apparatus 1 by means of the build material application device 7 with at least one energy beam 5. The irradiation device 8 may at least comprise a beam generating unit (not shown) configured to generate the at least one energy beam 5. The irradiation device 8 can comprise a beam deflecting unit (not shown), e.g. a scanning unit, configured to deflect the at least one energy beam 5 to diverse positions within the build plane BP of the apparatus 1.

The build material application device 7 is configured to apply an amount of build material 4 in the build plane BP of the apparatus 1 so as to form respective build material layers 3 which are to be selectively irradiated and consolidated during additively manufacturing an object 2 by means of the energy beam 5.

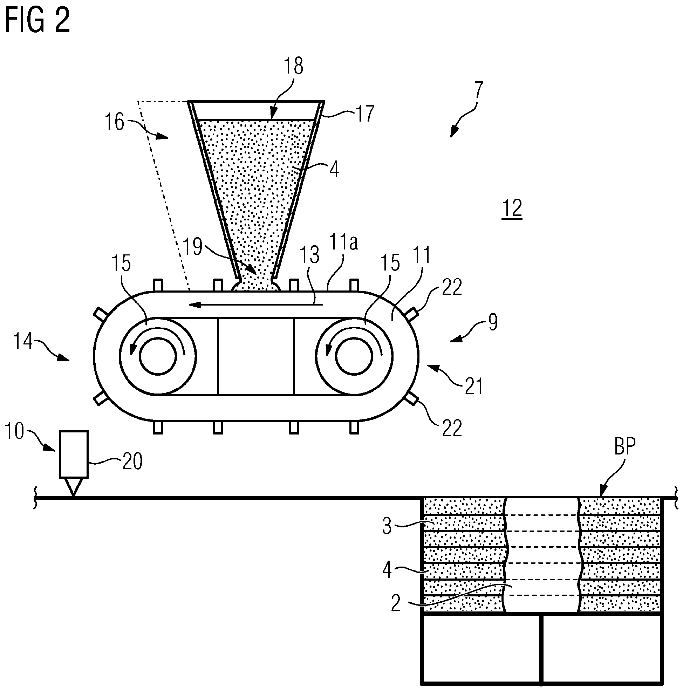

The build material application device 7 comprises a build material conveying unit 9 and a recoating unit 10 (see also Fig. 2 - 6).

As is apparent from Fig. 2 - 6, the build material conveying unit 9 comprises at least one band- or belt-like conveying element 11 disposed in the process chamber 12 of the apparatus 1. The conveying element 11 may be built as or comprise at least one endless band-, belt-, chain-, or bucket wheel- arrangement, the conveying element 11 may thus, be or comprise an endless conveyor.

As is apparent from Fig. 2 - 6, the at least one conveying element 11 is disposed above the build plane BP of the apparatus 1 so that there is a vertical gap between the at least one conveying element 11 and the build plane BP of the apparatus 1. The at least one conveying element 11 may thus, be supported in a hanging or suspended arrangement.

The at least one conveying element 11 is operable to convey build material 4 along a build material conveying path CP above the build plane BP of the apparatus 1. As the build material conveying path CP is disposed above the build plane BP of the apparatus 1, there is a vertical gap between the build material conveying path CP and the build plane BP of the apparatus 1. The at least one conveying element 11 thus, defines a build material conveying path CP extending above the build plane BP of the apparatus 1. The build material conveying path CP is defined by a loading portion 13 of the conveying element 11 at which build material 4 which is to be conveyed along the build material conveying path CP is or can be loaded onto the at least one conveying element 11 and an unloading portion 14 of the conveying element 11 from which build material 4 which has been conveyed along the build material conveying path CP is or can be unloaded from the conveying element 11. The at least one conveying element 11 is thus, operable to convey build material 4 between the loading portion 13 and the unloading portion 14.

As is apparent from the Fig., the build material conveying path CP extends parallel to the build plane BP of the apparatus 1, i.e. parallel to a bottom or top wall of the process chamber 12 of the apparatus 1. As such, the at least one conveying element 11 also extends parallel to the build plane BP of the apparatus 1, i.e. parallel to a bottom or top wall of the process chamber 12 of the apparatus 1. Yet, other orientations of the build material conveying path CP, such as inclined orientations of the build material conveying path CP relative to the build plane BP of the apparatus 1, are conceivable. The aforementioned other orientations of the build material conveying path CP such relative to the build plane BP of the apparatus 1 are feasible by changing the orientation of the conveying element 11 relative to the build plane BP of the apparatus 1 which can be accomplished by a hingeable or pivotable support of the at least one conveying element 11 allowing for hinging or pivoting the at least one conveying element 11 relative to the build plane BP of the apparatus 1, for instance.

The length of the build material conveying path CP corresponds to a defined amount of build material 4 conveyable or to be conveyed by the at least one conveying element 11. Hence, by varying the length of the build material conveying path CP, i.e. the distance between the loading portion 13 and the unloading portion 14 of the at least one conveying element 11, the amount of build material 4 which is conveyable or conveyed by the at least one conveying element 11 can be varied.

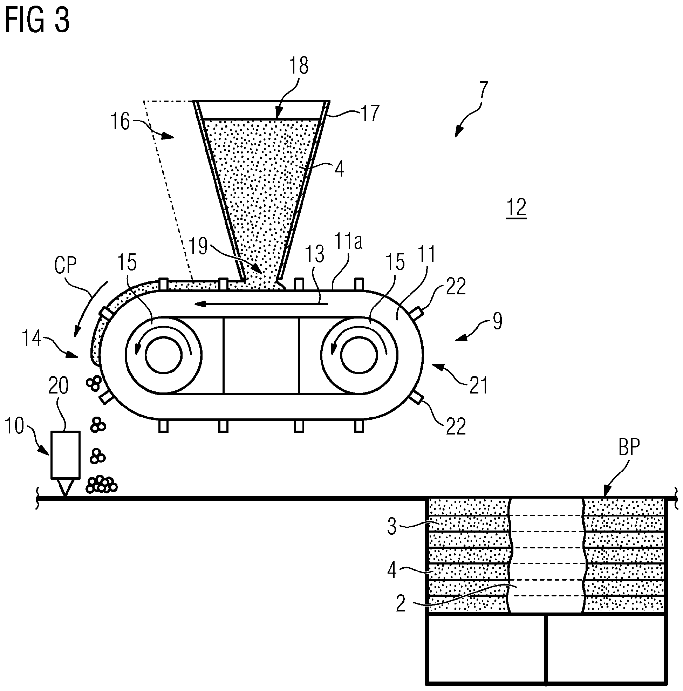

The at least one conveying element 11 is driveable or moveable in terms of a band- or belt-conveyor. The at least one build material conveying unit 9 thus, typically comprises a drive (not shown), e.g. a motor, directly or indirectly coupled to the conveying element 11 so as to drive or move the at least one conveying element 11 in at least one degree of freedom of motion. When driven or moved, the at least one conveying element 11 moves relative one or more supporting elements 15, such as rollers, wheels, etc., supporting the at least one conveying element 11. As is apparent from Fig. 2 - 6, a respective motion of the at least one conveying element 11 is or comprises a revolving motion in which the conveying element 11 revolves around respective supporting elements 15 in accordance with a band- or belt-conveyor. Fig. 2 shows the at least one conveying element 11 when revolving action is initiated, Fig. 3 shows the at least one conveying element 11 during revolving action.

The build material application device 7 further comprises at least one build material containing unit 16. A respective build material containing 16 unit comprises a, particularly container-like, containing element 17 disposed above the at least one conveying element 11. The containing element 17 comprises a build material receiving space 18 or volume allowing for receiving a defined amount of build material 4, e.g. supplied from a superordinate build material supply (not shown). The build material receiving space 18 or volume of the containing element 17 is defined by walls of the containing element 17. The receiving space 18 or volume communicates with an outlet opening 19 of the containing element 17 allowing for outputting build material 4 from the build material receiving space 18 or volume onto the at least one conveying element 11, i.e. particularly onto a freely exposed conveying surface 11a of the at least one conveying element 11 which is oriented towards the containing element 17.

As is apparent from Fig. 2 - 6, the outlet opening 19 of the containing element 17 may be at least temporarily unobstructed. The containing element 17 may thus, comprise an unobstructed outlet opening 19 through which build material 4 is outputtable or output from the containing element 17 onto the conveying element at least one 11, particularly onto the freely exposed conveying surface 11a of the at least one conveying element 11 which is oriented towards the containing element 17.

Fig. 2 - 6 further show that the distance between the containing element 17, particularly the outlet opening 19 of the containing element 17, and the at least one conveying element 11, particularly the freely exposed conveying surface 11a of the at least one conveying element 11 which is oriented towards the containing element 17, can be relatively small. The distance can be less than 10 mm, particularly less than 5 mm, preferably less than 1 mm. Generally, the distance - which is typically defined by a gap space between the containing element 17 and the at least one conveying element 11 - may be so small that the conveying surface 11a of the at least one conveying element 11 builds a barrier avoiding undesired excess output of build material 4 from the containing element 17 onto the at least one conveying element 11. Hence, the output of build material 4 from the containing element 17 can be controlled by driving or moving the at least one conveying element 11 relative to the outlet opening 19 of the containing element 17 allowing for a continuous or discontinuous output of build material 4 from the containing element 17 onto the at least one conveying element 11. A small distance between the outlet opening 19 of the containing element 17 and the at least one conveying element 11 also allows for avoiding undesired generation of dust, swirl, etc.

Fig. 2 shows in dashed lines that the containing element 17 may optionally be moveably supported relative to a conveying element 11, or vice versa, so as to adjust the distance between the loading portion 13 of the conveying element 11 and the unloading portion 14 of the conveying element 11. As mentioned above, the distance between the loading portion 13 and the unloading portion 14 of the conveying element 11 corresponds to a defined amount of build material 4 conveyable or to be conveyed by the conveying element 11.

The recoating unit 7 comprises at least one recoating element 20 disposed in the process chamber 12 of the apparatus 1 below the at least one conveying element 11. As is apparent from the Fig., the recoating element 20 is operable to apply an amount of build material 4 in the build plane BP of the apparatus 1 so as to form a build material layer which is to be selectively irradiated and consolidated by means of the at least one energy beam 5.

The recoating element 20 is moveably supported at least along a build material application path (exemplarily indicated by arrow P1 in Fig. 1) in which the recoating element 20 is moveable or moved across the build plane BP of the apparatus 1 so as to form a build material layer which is to be selectively irradiated and consolidated by means of the at least one energy beam 5. As such, the recoating element 20 may be also moveably supported relative to the conveying unit 10 and the at least one conveying element 11, respectively. The recoating unit 10 thus, typically comprises a drive (not shown), e.g. a motor, directly or indirectly coupled to the recoating element 20 so as to drive or move the recoating element 20 in at least one degree of freedom of motion. The degree of freedom motion of the recoating element 20 is or comprises a linear motion in which the recoating element 20 linearly moves along the build material application path across the build plane BP of the apparatus 1.

As is apparent from the Fig, the recoating element 20 may be built as or comprise a recoating blade. Yet, other embodiments of the recoating element 20 are conceivable. As such, the recoating element 20 may be built as or comprise a build material chamber (not shown) having at least one, particularly gate-like, opening through which build material 4 may be output from the build material chamber so as to apply an amount, particularly a specific amount, of build material 4 in the build plane BP of the apparatus 1 so as to form a build material layer 3 which is to be selectively irradiated and consolidated by means of the at least one energy beam 5. The build material chamber may comprise at least one closing element allocated to the at least one opening of the build material chamber so as to concertedly open or close the opening of the build material chamber.

As is particularly apparent from Fig. 2, 3, the conveying unit 7, i.e. particularly the at least one conveying element 11, and the recoating unit 10, i.e. particularly the recoating element 20, act together in such a manner that the at least one conveying element 11 doses an amount of build material 4, particularly a specific amount of build material 4, for the recoating element 20. The recoating element 20 applies this dosed amount of build material 4 in the build plane BP of the apparatus 1 so as to form a respective build material layer 3 which is to be selectively irradiated and consolidated by means of the at least one energy beam 5. The at least one conveying element 11 allows for efficient and highly exact dosing of build material 4 which is to be applied in the build plane BP of the apparatus 1 by the recoating element 20 so as to form a respective build material layer 3 resulting in a build material application approach with increased efficiency and quality.

The embodiments of Fig. 1 - 3 show that the at least one conveying element 11 may be stationary supported in the process chamber 12 of the apparatus 1, particularly in a region lateral to the build plane BP of the apparatus 1. Generally, the at least one conveying element 11 is typically disposed in a region of the process chamber 12 of the apparatus 1 in which it cannot negatively affect the at least one energy beam 5 and the selective irradiation of a build material layer 4 in the build plane BP of the apparatus 1 by means of the at least one energy beam 5.

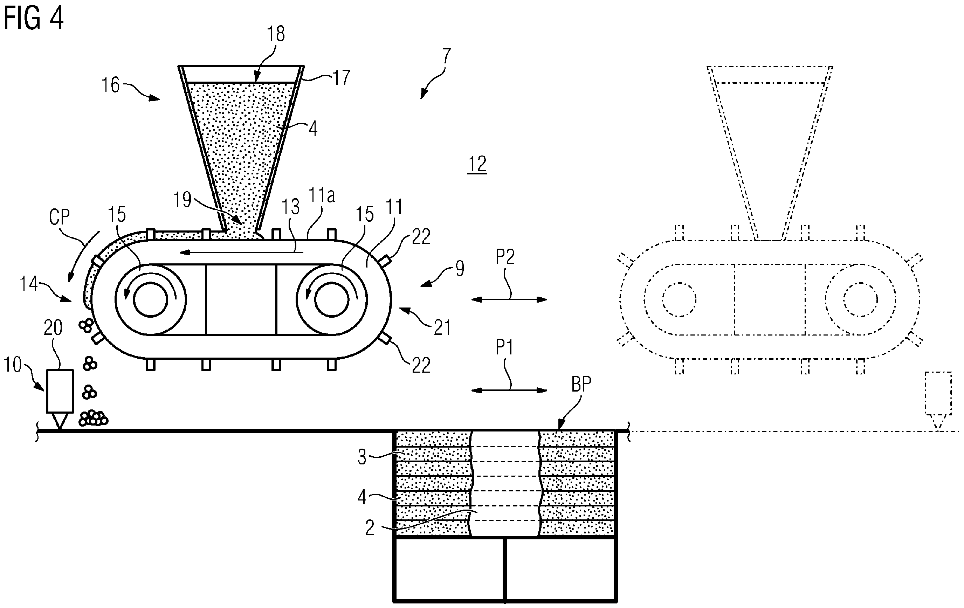

Yet, as is apparent from the exemplary embodiment of Fig. 4, it is also possible that at least one conveying element 11 is moveably supported relative to the build plane BP of the apparatus 1. The conveying element 11 may be moveably supported relative to the build plane BP of the apparatus 1 so as to move in a motion path (indicated by arrow P2 in Fig. 4) across the build plane BP of the apparatus 1. As such, the conveying element 11 may be moveably supported relative to the build plane BP of the apparatus 1 in a motion path defined between a first position (see Fig. 4 left position) at a first lateral side of the build plane BP of the apparatus 1 and a second position (see Fig. 4 right side) at a second lateral side of the build plane BP of the apparatus 1 so as to be reversibly moveable between the two positions. As is apparent from Fig. 4, the two positions of the conveying element 11 may correspond to respective start and/or end positions of the recoating element 20 so that the conveying element 11 may dose an amount of build material 4 in the respective start and/or end positions of the recoating element 20 at two sides of the build plane BP of the apparatus 1 allowing for that the recoating element 20 can apply build material 4 in the build plane BP of the apparatus 1 when starting its motion across (indicated by arrow P1 in Fig. 4) the build plane BP of the apparatus 1 from either side of the build plane BP of the apparatus 1. The motion of the conveying element 11 across the build plane BP of the apparatus 1 may be synchronized with the motion of the recoating element 20 across the build plane BP of the apparatus 1.

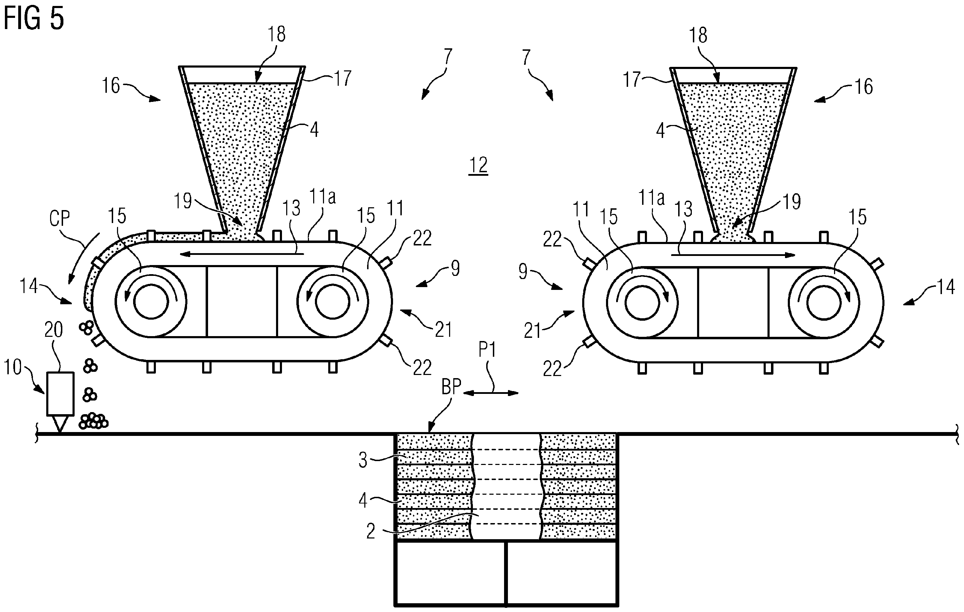

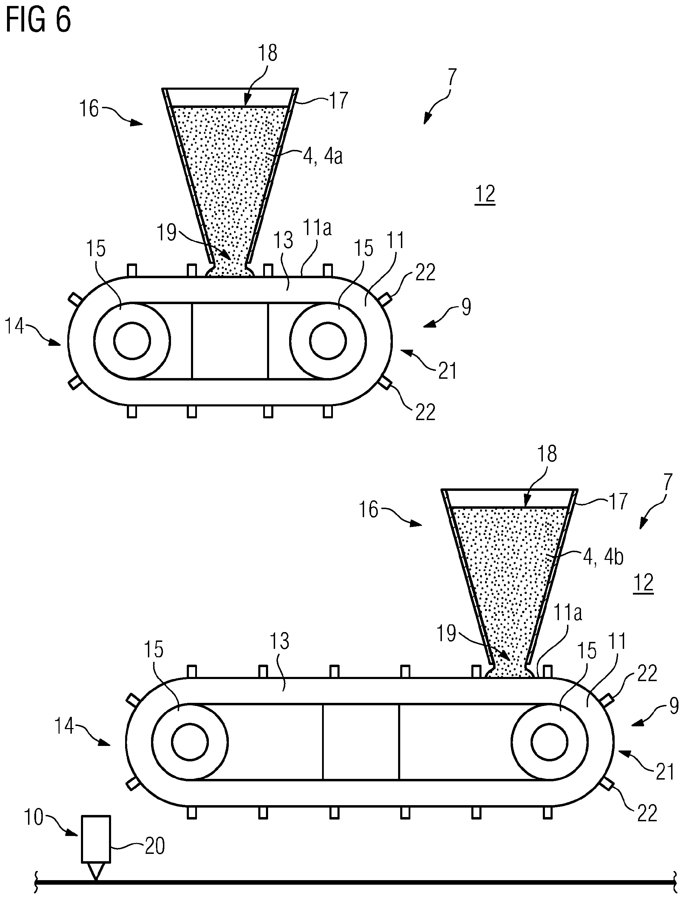

As is apparent from the exemplary embodiments of Fig. 5, 6 the build material conveying unit 9 may comprise two (or more) separate conveying elements 11.

According to the exemplary embodiment of Fig. 5, a first conveying element 11 is disposed at a first lateral side of the build plane BP of the apparatus 1 and a second conveying element 11 is disposed at a second lateral side of the build plane BP of the apparatus 1. As such, the build material application device 7 may also comprise two (or more) separate containing elements 17, whereby at least one first containing element 17 is assigned to at least one first conveying element 11 and at least one second containing element 17 is assigned to at least one second conveying element 11.

According to the exemplary embodiment of Fig. 6, a first conveying element 11 is disposed at a first vertical position and a second conveying element 11 (lower conveying element) is disposed at a second lateral position below the first conveying element 11 (upper conveying element). As such, build material 4 conveyed by the first conveying element 11 is conveyable onto the conveying surface 11a of the second conveying element 11. Hence, a vertically staggered, yet horizontally typically at least partially overlapping arrangement of at least two conveying elements 11 is possible, whereby build material 4 conveyed from an upper conveying element 11 can be conveyed onto the freely exposed conveying surface 11a of a lower second conveying element 11. As is apparent from Fig. 6, the build material conveying device 7 may also comprise at least two separate containing elements 17, whereby a first containing element 17 is assigned to the first conveying element 11 and a second containing element 17 is assigned to the second conveying element 11.

According to exemplary embodiment of Fig. 6, the first conveying element 11 may convey a first build material 4a and the second conveying element 11 may convey a second build material 4b which differs from the first build material 4a in at least one chemical and/or physical build material parameter, e.g. chemical composition, particle size (distribution), particle morphology (distribution), etc. Thus, a concerted mixing of first and second build materials 4a, 4b is possible e.g. on the conveying surface 11a of the second conveying element 11 so as to generate and convey a mixture of first and second build materials 4a, 4b.

In either embodiment of the Fig., the control device 6 of the apparatus 1 may be configured to control operation of the build material application device 7. The control device 6 is particularly configured to control at least one conveying motion parameter of a conveying motion of the conveying element(s) 11, particularly conveying direction, conveying speed, start and stop intervals of conveying, etc. The control device 6 may be configured to control a conveying motion of the conveying element(s) 11 on basis of a motion and/or position of the recoating element 20 relative to the conveying element(s) 11. The control device 6 may thus, be configured to start a conveying motion of the conveying element(s) 11, e.g. a revolving motion of the conveying element(s) 11 as mentioned above, when the recoating element 20 is moved and/or positioned outside the build plane BP of the apparatus 1. The control device 6 may be particularly, configured to start a conveying motion of the conveying element(s) 11 when the recoating element 20 is moved and/or positioned outside the build plane BP of the apparatus 1 and within a pre-definable or pre-defined minimum distance relative to the conveying element(s) 11, particularly relative to a build material unloading portion 13 of the conveying element(s) 11. The recoating element 20 may be moved and/or positioned within a pre-definable or pre-defined minimum distance relative to the conveying element(s) 11, particularly relative to a build material unloading portion 14 of the conveying element(s) 11, when the recoating element 20 is in a start position from which it starts its motion along the build material application path across the build plane BP of the apparatus 1, for instance. The conveying element(s) 11 may thus, be operable in discontinuous manner. Yet, a continuous operation of the conveying element(s) 11 is generally, also conceivable.

A respective detection of motion and/or positions of the recoating element 20 may be detected by a detection device (not shown) of the apparatus 1. The detection device may comprise at least one, e.g. optical or mechanical, detection element configured to detect motions and/or positions of the recoating element 20.

As indicated in Fig. 1, yet applicable to either embodiment of the Fig., the freely exposed conveying surface 11a of a respective conveying element 11 may be optionally provided with a plurality of build material conveying compartments 21 of given dimensions. Providing the conveying element(s) 11 with respective compartments 21 may improve exact dosing of build material 4 by the conveying element(s) 11. Respective build material conveying compartments 21 may be defined by adjacent protrusion-like elements 22. As such, the conveying element(s) 11 may comprise a toothed structure. The conveying element(s) 11 may thus, be built as or comprise a toothed band, belt, chain, or bucket wheel, for instance.

The build material application device 7 of the embodiments allow for implementing a method for applying an amount of build material 4 in a build plane BP of an apparatus 1 for additively manufacturing a three-dimensional object 2, so as to form a build material layer 3 which is to be selectively irradiated and consolidated by means of at least one energy beam 5. The method can be performed by a respective build material application device 7. The method may particularly, comprise the steps of: conveying an amount of build material 4 along a build material conveying path CP by means of a build material conveying unit 9 comprising at least one, particularly band- or belt-like, build material conveying element 11, the conveying element 11 being configured to convey build material 4 along a build material conveying path CP above the build plane BP; and applying the amount of build material 4 conveyed by the build material conveying element 11 by the recoating element 20 so as to form a build material layer 3 which is to be selectively irradiated and consolidated in the build plane BP of the apparatus 1.

Single, a plurality, or all features mentioned in context with a specific embodiment may also apply to other embodiments. Hence, a single, a plurality, or all features mentioned in context with a specific embodiment may be combined with at least one feature of another specific embodiment.

## Claims

1. Apparatus (1) for additively manufacturing a three-dimensional object (2) by means of successive layerwise selective irradiation and consolidation of layers of build material (4) which can be consolidated by means of at least one energy beam (5), the apparatus (1) comprising a build material application device (7) configured to apply an amount of build material (4) in a build plane (BP) of the apparatus (1) so as to form a build material layer (3) which is to be selectively irradiated and consolidated by means of the at least one energy beam (5), **wherein** the build material application device (7) comprises:
a build material conveying unit (9) comprising at least one, particularly band- or belt-like, conveying element (11), the conveying element (11) being operable to convey build material (4) along a build material conveying path (CP) above the build plane (BP) of the apparatus (1); and
a recoating unit (10) comprising at least one recoating element (20) being operable to apply an amount of build material (4) in the build plane (BP) of the apparatus (1) so as to form build material layer (3) which is to be is to be selectively irradiated and consolidated by means of the at least one energy beam (5).

2. Apparatus according to Claim 1, **wherein** the build material conveying unit (9) is disposed above the build plane (BP) of the apparatus (1).

3. Apparatus according to Claim 1 or 2, **further comprising** a build material containing unit (16) comprising at least one, particularly container-like, containing element (17) disposed above the build material conveying unit (9), particularly above the at least one conveying element (11).

4. Apparatus according to Claim 3, **wherein** the at least one containing element (17) comprises an unobstructed outlet opening (19) through which build material (4) is outputtable or output from the at least one containing element (17) on the at least one conveying element (11), particularly a freely exposed conveying surface (11a) of the at least one conveying element (11) which is oriented towards the at least one containing element (17).

5. Apparatus according to Claim 4, **wherein** the distance between the at least one containing element (17), particularly a build material outlet (19) opening of the at least one containing element (17), and the at least one conveying element (11), particularly the freely exposed conveying surface (11a) of the at least one conveying element (11) which is oriented towards the at least one containing element (17), is less than 10 mm, particularly less than 5 mm, preferably less than 1 mm.

6. Apparatus according to Claim 4 or 5, **wherein** the at least one containing element (17) is moveably supported relative to the at least one conveying element (11), or vice versa, so as to adjust the distance between a loading portion (13) of the at least one conveying element (11) at which build material (4) is or can be loaded on the at least one conveying element (11) and an unloading portion (14) of the at least one conveying element (11) from which build material (4) conveyed by the at least one conveying element (11) is or can be unloaded from the at least one conveying element (11).

7. Apparatus according to any of the preceding Claims, **further comprising** a control device (6) configured to control at least one conveying motion parameter of a conveying motion of the at least one conveying element (11), particularly conveying direction, conveying speed, start and stop intervals of conveying.

8. Apparatus according to Claim 7, **wherein** the control device (6) is configured to control a conveying motion of the at least one conveying element (11) on basis of a motion and/or position of the recoating element (20) relative to the conveying element (11).

9. Apparatus according to any of the preceding Claims, **wherein** the or at least one conveying element (11) is stationary supported in a process chamber (12) of the apparatus (1), particularly in a region lateral to the build plane of the apparatus.

10. Apparatus according to any of the preceding Claims, **wherein** the or at least one conveying element (11) is moveably supported relative to the build plane (BP) of the apparatus (1), particularly synchronized with a motion of the recoating element (20) relative to the build plane (BP) of the apparatus (1).

11. Apparatus according to any of the preceding Claims, **comprising** at least two separate conveying elements (11), whereby a first conveying element (11) is disposed at a first lateral side of the build plane (BP) of the apparatus (1) and a second conveying element (11) is disposed at a second lateral side of the build plane (BP) of the apparatus (1).

12. Apparatus according to any of the preceding Claims, **comprising** at least two separate conveying elements (11), whereby at least one first conveying element (11) is disposed at a first vertical position and at least one second conveying element is disposed at a second vertical position below the at least one first conveying element (11), particularly such that that build material (4) conveyed by the first conveying element (11) is conveyable onto a conveying surface (11a) of the at least one second conveying element (11).

13. Apparatus according to Claim 12, **wherein** the at least one first conveying element (11) conveys a first build material and the at least one second conveying element (11) conveys a second build material which differs from the first build material in at least one chemical and/or physical build material parameter.

14. Build material application device (7) for an apparatus (1) for additively manufacturing a three-dimensional object (2) by means of successive layerwise selective irradiation and consolidation of layers of build material (4) which can be consolidated by means of at least one energy beam (5), the build material application device (7) being configured to apply an amount of build material (4) in a build plane (BP) of a respective apparatus (1) so as to form a build material layer (3) which is to be selectively irradiated and consolidated by means of the at least one energy beam (5), the build material application device (7) comprising:
a build material conveying unit (9) comprising at least one, particularly band- or belt-like, conveying element (11), the conveying element (11) being operable to convey build material (4) along a build material conveying path (CP) above the build plane (BP) of the apparatus (1); and
a recoating unit (10) comprising at least one recoating element (20) being operable to apply an amount of build material (4) in the build plane (BP) of the apparatus (1) so as to form build material layer (3) which is to be is to be selectively irradiated and consolidated by means of the at least one energy beam (5).

15. Method for applying an amount of build material (4) in a build plane (BP) of an apparatus (1) for additively manufacturing a three-dimensional object (2), so as to form a build material layer (3) which is to be selectively irradiated and consolidated by means of at least one energy beam (5), wherein a build material application device (7) according to Claim 14 is used for performing the method.
